# EUROPÄISCHE PATENTSCHRIFT

(11) **EP 1 008 844 B1**
(45) Veröffentlichungstag und Bekanntmachung des Hinweises auf die Patenterteilung: **21.01.2009**
(21) Anmeldenummer: 99122527.7
(22) Anmeldetag: 12.11.1999
(51) Int. Cl.: G01N 21/07

(54) **Multiküvettenrotor**
Multi-cuvette rotor
Rotor avec multiples cuvettes

(30) Priorität: 11.12.1998 DE 19857215
(43) Veröffentlichungstag der Anmeldung: 14.06.2000
(73) Patentinhaber: Siemens Healthcare Diagnostics Products GmbH, 35041 Marburg (DE)
(72) Erfinder: Fickenscher, Karl Dr., 35041 Marburg (DE); Kube, Oliver, 60316 Frankfurt (DE)

(56) Entgegenhaltungen:
- EP-A- 0 405 162
- EP-A- 0 417 305
- EP-A- 0 608 006
- WO-A-98/38487

## Beschreibung

Die Erfindung betrifft einen Multiküvettenrotor für einen automatisch arbeitenden Analysator zur Untersuchung von biologischen Flüssigkeiten wie Blut, Blutplasma oder Blutserum.

Aus der deutschen Patentanmeldung 39 37 609 ist bereits ein Küvettenrotor mit kreisförmig angeordneten und sich radial erstreckenden, einzelnen, allseits geschlossenen Küvetten bekannt. Die Küvetten weisen dabei je drei Kammern auf, die durch einen Damm voneinander getrennt sind. Die Küvetten sind in ihrer radialen Ausdehnung von im wesentlichen parallel zueinander stehenden seitlichen Wänden, einem Oberteil und einem Unterteil begrenzt. Jede Kammer weist ein Pipettierloch auf, durch welches die zu untersuchende biologische Flüssigkeit oder die Reagenzien zugeführt werden können. Im allgemeinen wird in den zur Drehachse hin angeordneten Kammern die biologische Flüssigkeit und in den peripher liegenden Kammern das spezifische Reagenz- und ggf. Verdünnungsmittel vorgelegt, die sich mit der biologischen Flüssigkeit mischen und reagieren, sobald letztere durch die Wirkung der Zentrifugalkräfte über den Damm in die peripher angeordneten Kammern gelangt sind. Die optische Messung erfolgt senkrecht zur Rotorebene bei fester Schichtdicke der zu analysierenden Flüssigkeit.

Aus der EP-A-0 405 162 ist ein ähnlicher Küvettenrotor bekannt, auf dem ebenfalls eine Vielzahl gleichartiger Küvetten kreisförmig angeordnet sind. Bei diesem Küvettenrotor sind zur Raumersparnis die Zwischenräume zwischen den einzelnen Küvetten als geschlossene Gefäße zum Verdünnen von Proben ausgebildet. Aus der US 4,580,897 ist ebenfalls ein Küvettenrotor bekannt, auf dem eine Vielzahl gleichartiger Küvetten kreisförmig angeordnet sind. In der EP-A-0 417 305 sind verschiedenartige Flusskanalformen zum radialen Transport von Probenflüssigkeiten auf einem Rotor für einen Zentrifugalanalysator beschrieben. In der DE-U1-81 12 738 ist ein Küvettenrotor beschrieben, der ebenfalls über eine Vielzahl gleichartiger Analyseküvetten verfügt sowie über eine zentrale Kammer für die Verteilung von Flüssigkeit in die Analyseküvetten.

Bei den bekannten Küvettenrotoren sind die Anzahl und die Form der Kammern als auch die Meßküvetten einheitlich gestaltet. Daher ist es nicht möglich, den gesamten zur Verfügung stehenden Platz auf dem Rotor für Messungen zu nutzen. Da weniger Meßküvetten als bei einer Vollausnützung des Platzes untergebracht werden können, sind die Kosten für jede einzelne Messung höher als nötig. Außerdem wird die Walk-Away-Zeit, also die Zeit, die das Gerät ohne Aufsicht arbeitet, unnötig begrenzt, wenn nicht die maximale Anzahl von Küvetten auf dem Gerät einen Platz findet.

Aus der DE-A1-30 44 372 ist eine Rotoreinheit für einen Zentrifugalanalysator bekannt, die aus einer mit einem Antrieb verbundenen Rotorbasis und einem aufsetzbaren Rotorkopf besteht, wobei der Rotorkopf eine Mehrzahl verschiedener Einsatzelemente aufweist. Je nach Analyseaufgabe können Einsatzelemente verschiedener Bauweise verwendet werden, wodurch z. B. Bestimmungen mehrerer Bestandteile einer Probe ohne Platzverschwendung möglich ist. Aus der EP-A-0 608 006 ist eine Anordnung von Kammern auf einem Rotor bekannt, die es ermöglicht ausschließlich durch Zentrifugalkräfte, Plasma aus einer Vollblutprobe abzutrennen und das Plasma in mehrere Messzellen zu transportieren. Zur gleichzeitigen Bearbeitung mehrerer Proben können mehrere solcher Anordnungen auf dem Rotor platziert werden.

Es stellte sich deshalb die Aufgabe, einen Multiküvettenrotor zu entwickeln, der unter optimaler Ausnutzung der zur Verfügung stehenden Fläche die Unterbringung einer größeren Anzahl von Meßküvetten auf dem Rotor gestattet und außerdem unterschiedliche Kammersysteme für die Meßküvetten zur Verfügung stellt, die den Meßerfordernissen durch verschiedenartige Kammerformen und Kammervolumina Rechnung tragen.

Gelöst wird diese Aufgabe durch einen Multiküvettenrotor nach Anspruch 1.

Dieser Multiküvettenrotor wird durch die beiliegenden Zeichnungen in seinen Einzelheiten dargestellt:
- Fig. 1: zeigt einen Ausschnitt des Multiküvettenrotors mit radial angeordneten optischen Meßfenstem 3,
- Fig. 2: zeigt einen Ausschnitt des Multiküvettenrotors mit unterschiedlich gestalteten Meßfenstem 3, die sich in gleichen oder unterschiedlichen Abständen zueinander und/oder in ungleichmäßigen tangentialen Abständen zueinander von der Drehachse des Rotors befinden;
- Fig. 3: zeigt, daß die Meßfenster der Küvetten gleiche oder unterschiedliche Größen aufweisen;
- Fig. 4/5: zeigen Meßküvetten mit unterschiedlichem Abstand der im Ober- und Unterteil einander gegenüberliegenden Meßfenster, die als optische Linsen ausgestaltet sein können;
- Fig. 6: zeigt eine Vielzahl unterschiedlich angeordneter Vorlegekammern 6, die über Rampen 7 mit der Meßküvette verbunden sind,
- Fig. 7/8: zeigen Meßküvetten, die aus mehreren nebeneinander liegenden oder mehrlagig übereinander liegenden Kammern oder Kammerkombinationen gespeist oder parallel gespeist werden, wobei deren Meßfenster gegenüber den Meßfenstern andere Meßküvetten tangential oder radial oder in Drehachsrichtung versetzt sein können,
- Fig. 9: zeigt gegeneinander versetzte, übereinander angeordnete Kammern, die mit einem oder mehreren Pipettierlöchern versehen und durch Rampen voneinander abgetrennt sein können;
- Fig. 10: zeigt eine spezielle Ausgestaltung der Kammern mit beidseitigen Rampen 7, durch welche in Kombination mit horizontalen Rampen Düsen 8 ausgebildet werden können;
- Fig. 11/12: zeigen Kammern mit abgerundeten Wandübergängen,

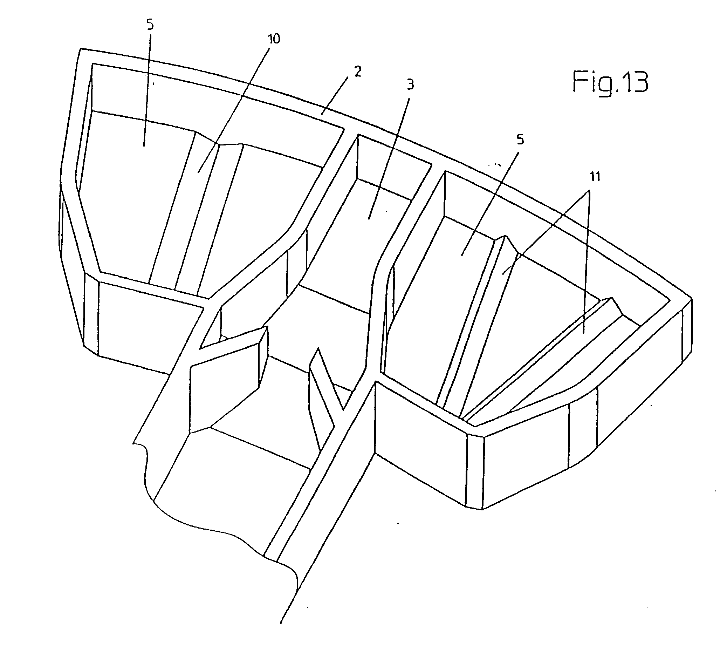

- Fig. 13: zeigt Rillen- oder Rippenstrukturen auf dem Boden der Kammern,
- Fig. 14: zeigt ein Kammersystem, bei dem die während der Nachweisreaktion abzutrennenden Bestandteile über die Rampe 7 in eine außen liegende Kammer transportiert werden können, so daß sie die Messung nicht mehr stören können,

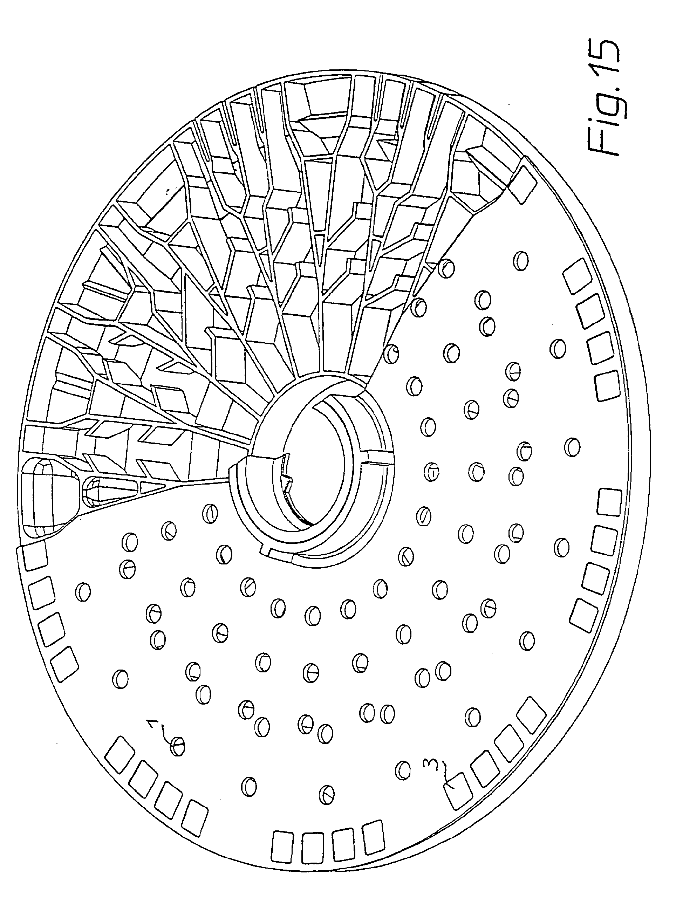

- Fig. 15: zeigt einen Überblick über die gesamte Fläche des Multiküvettenrotors.

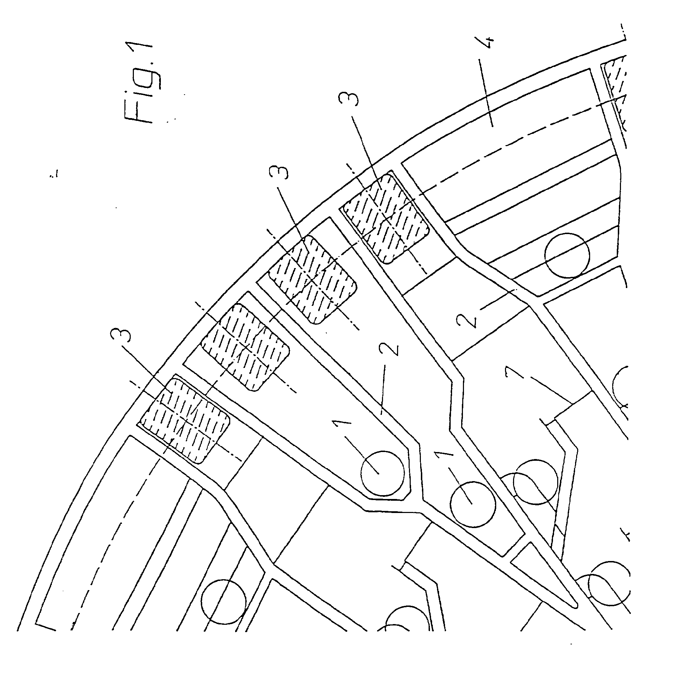

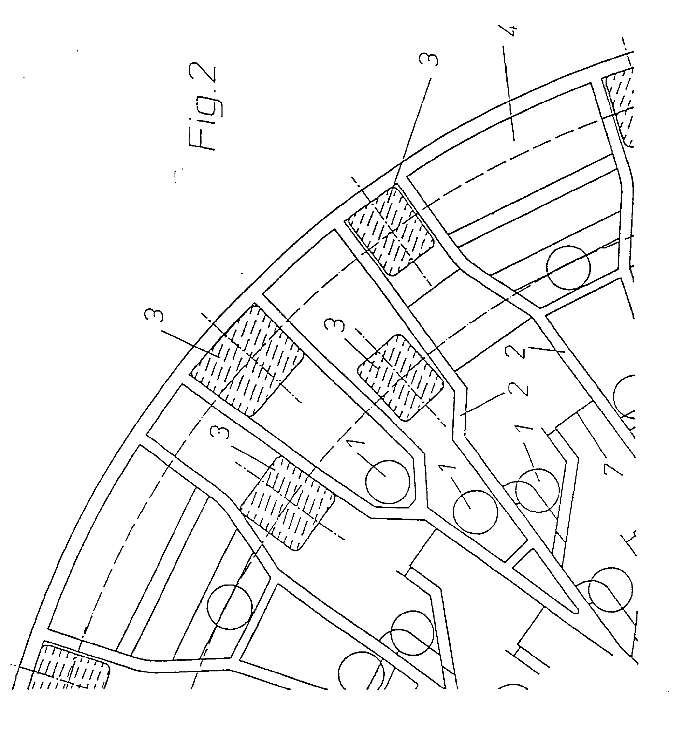

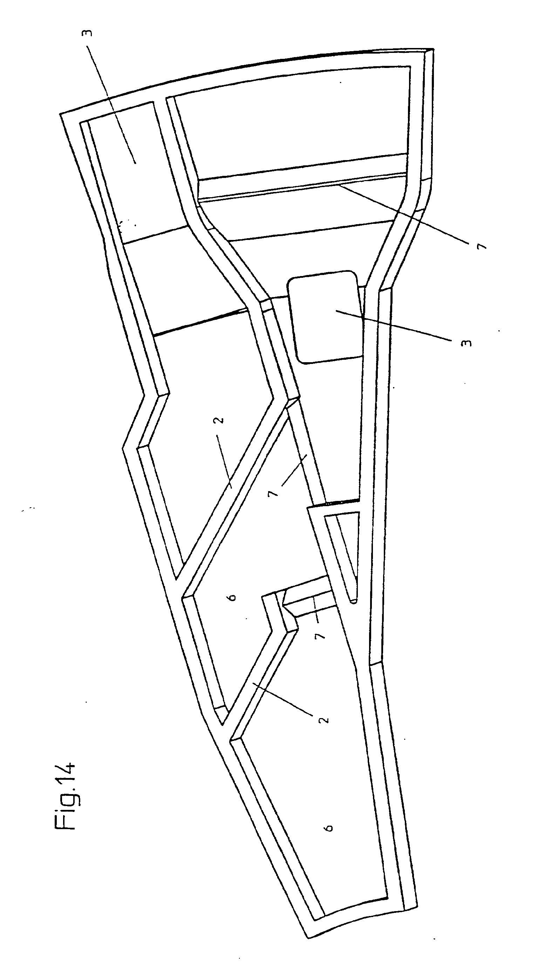

Die Zeichnungen zeigen die vielseitigen Anwendungsmöglichkeiten des erfindungsgemäßen Multiküvettenrotors. Die in Fig. 1 dargestellte radiale Anordnung der optischen Meßfenstern wird für viele Messungen ausreichend sein. Bei einigen Messungen bilden sich aber auch optisch undurchlässige Sedimente, die durch die Zentrifugalkraft an die innere Außenwand der Meßküvette wandern. In diesem Fall ist eine Messung in dem durch Sedimente getrübten Meßbereich nicht sinnvoll. Deshalb besteht ein Bedarf daran, das Meßfenster auch in einem bestimmten Abstand vom äußeren Rand der Meßküvette zur Verfügung zu haben. Eine derartige Konstruktion wird durch Fig. 2, 3 und 14 gezeigt.

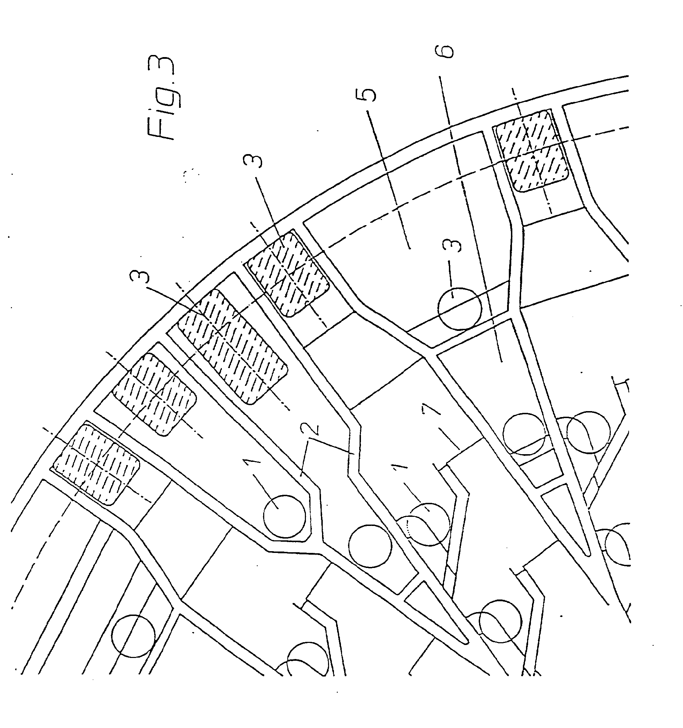

Eine besonders große Flexibilität bei den Messungen läßt sich dadurch erreichen, dass das Meßfenster 3 für bestimmte Messungen sehr groß gestaltet wird, so dass der Betrachter freie Wahl hat, in welchem Bereich er die Meßlösung optisch analysieren will. Das ist bei einer Konstruktion gemäß Fig. 3 möglich.

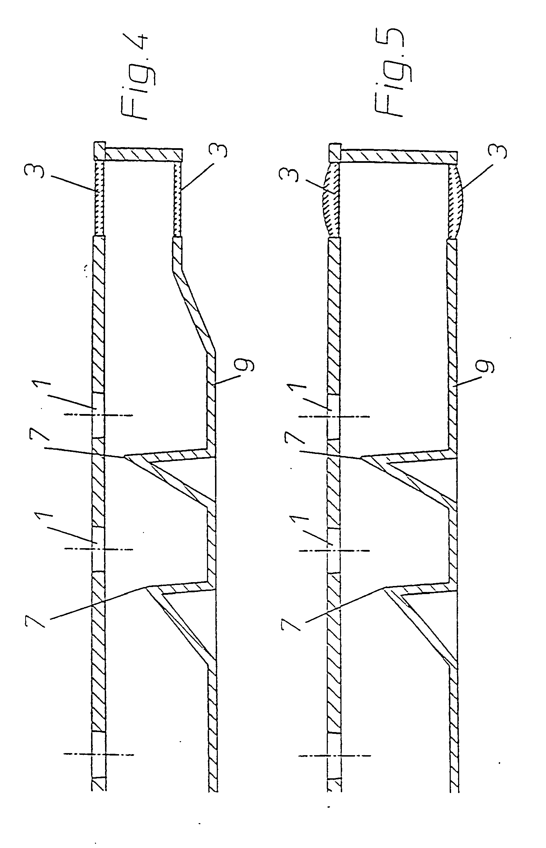

Bei bestimmten Messungen ist es wünschenswert, nicht auf eine einzige Schichtdicke bei der Betrachtung der zu untersuchenden Lösung in der Meßküvette festgelegt zu sein. Deshalb zeigen Fig. 4 und 5 verschiedene Möglichkeiten zu einer unterschiedlichen Gestaltung der Schichtdicke. Außerdem sind Rampen 7 zu sehen, die die mit unterschiedlichen Reagenzien gefüllten Vorlegekammern voneinander abtrennen, jedoch bei genügender Rotation eine Vermischung der Reagenzien dadurch ermöglichen, daß die Flüssigkeiten über die Rampen 7 in die weiter außen liegenden Kammern und schließlich in die Meßküvette einwandern. Außerdem sind hier deutlich die Pipettierlöcher 1 zu erkennen, die eine unterschiedliche Befüllung der einzelnen Kammern und der Meßküvette gestatten.

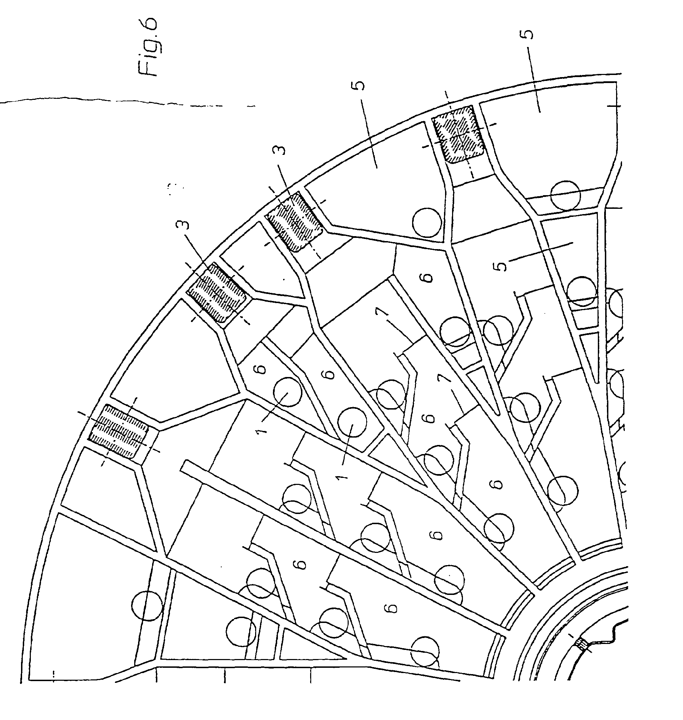

Die Vielzahl der möglichen Kammersysteme wird durch den in Fig. 6 dargestellten Ausschnitt des Multiküvettenrotors gezeigt. Jede Kammer ist dabei mit einem Pipettierloch 1 ausgerüstet und durch die Rampe 7 von der Nachbarkammer abgegrenzt. Außerdem sind Vorverdünnungskammern 5 zu erkennen.

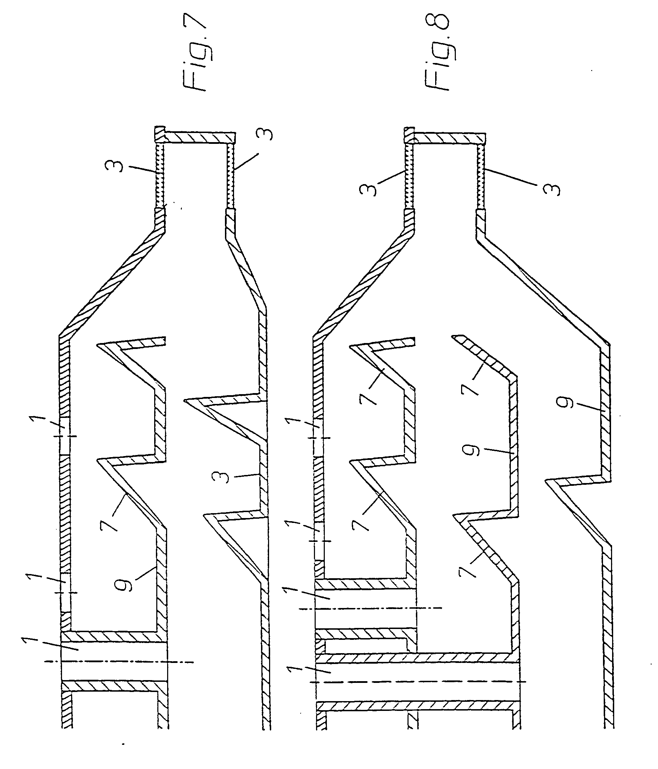

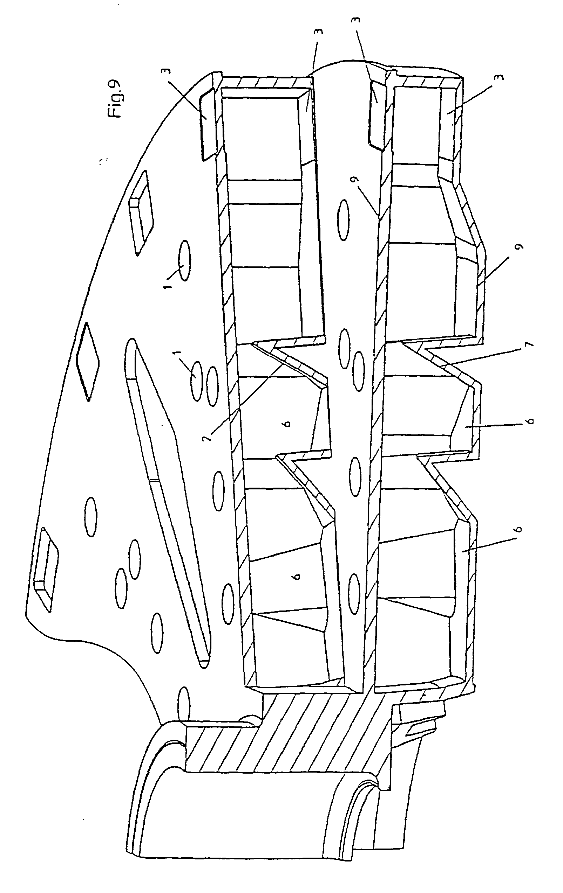

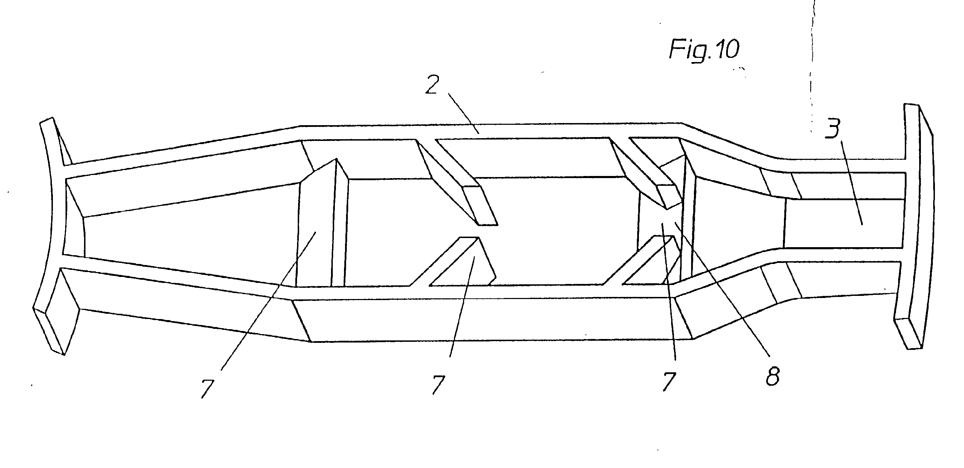

Eine besonders günstige Platzausnutzung der auf dem Rotor zur Verfügung stehenden Fläche wird gemäß den in Fig. 7 und 8 dargestellten Konstruktionen gezeigt, bei dem mehrere Kammern, die mit unterschiedlichen Reagenzien gefüllt sind, übereinander angeordnet werden können. Eine hohe Gestaltungsflexibilität, mit der die unterschiedlichsten analytischen Voraussetzungen erfüllt werden können, zeigt Fig. 9, in der die übereinander angeordneten Kammern auch tangential oder radial gegeneinander versetzt sein können. Die in Fig. 10 gezeigte spezielle Konstruktion einer mit Rampen 7 und Düsen 8 ausgerüsteten Kammer gewährleistet eine besonders intensive Vermischung der Reagenzien mit der zu untersuchenden Flüssigkeit.

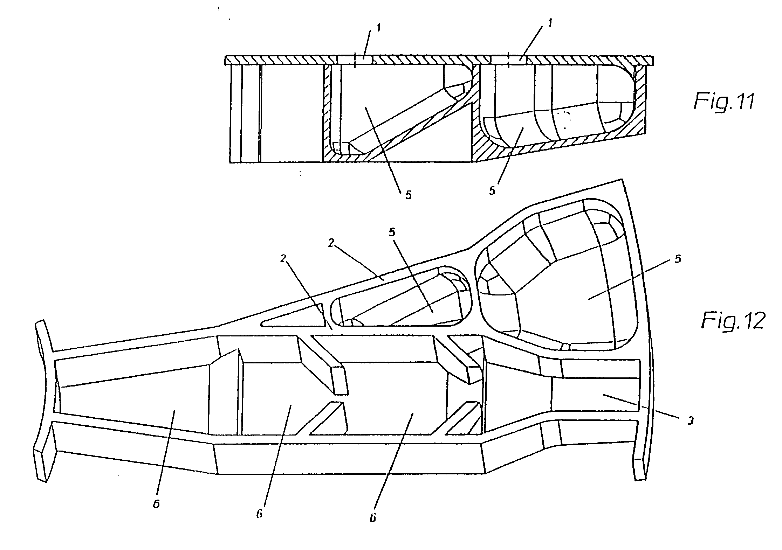

Eine die vorhandenen Reagenzien optimal ausnutzende Kammerkonstruktion ist in den Fig. 11 und 12 dargestellt. Durch die Abrundung aller Ecken der Kammern wird der sonst unvermeidliche Verlust von in den Kammerecken hängenbleibenden Reagenzmengen vor allem bei Vorverdünnungen und Vorreaktionen verhindert.

Der erfindungsgemäße Multiküvettenrotor kann in seiner Vielseitigkeit noch durch weitere Ausgestaltungen verbessert werden. So ist es bspw. möglich, die Meßfenster als optische Linsen zu formen, wodurch besonders exakte Messungen möglich sind. Eine weitere Verbesserung wird dadurch erreicht, daß die Kammerböden 9 eine Rillen- oder Rippenstruktur 10,11 aufweisen, die eine kapillare Wirkung entfalten und damit ein vollständiges Abfließen der Reagenzlösung in Richtung unter das Pipettierloch ermöglichen. Außerdem sind in dem erfindungsgemäßen Multiküvettenrotor auch noch Kammern für besondere Zwecke vorgesehen, z.B. Vollblutkammem 4 für die Zerlegung von Vollblut in Plasma und Blutzellen, aus denen das Plasma wieder entnommen werden kann. Außerdem sind auch Kammern für Vorverdünnungen und/oder Vorreaktionen 5 sowie Kammern zur Separation von Flüssigkeiten vorhanden.

Der Multiküvettenrotor selbst wird im allgemeinen aus einem einheitlichen, durchsichtigen, thermoplastischen Material wie Polystyrol (PS), Polycarbonaten oder Polymethylmethacrylat (PMMA) angefertigt. Seine Einzelteile können aber auch aus verschiedenen thermoplastischen Materialien bestehen. Besonders zweckmäßig ist es jedoch, den Multiküvettenrotor aus einem Mehrkomponenten-Material herzustellen. Die teilweise sehr empfindlichen Reagenzien bleiben dann in den weitgehend undurchsichtigen Kammern 6 von der Einwirkung des Lichts geschützt.

### Bezugszeichenliste:

- 1: Pipettierloch
- 2: Stege
- 3: Meßfenster
- 4: Vollblutkammer
- 5: Vorverdünnungskammer
- 6: Vorlegekammer
- 7: Rampe
- 8: Düse
- 9: Boden
- 10: Kapillar wirkende Rillen
- 11: Kapillar wirkende Rippen

## Patentansprüche

1. Multiküvettenrotor für einen automatisch arbeitenden Analysator zur Untersuchung von biologischen Flüssigkeiten, **dadurch gekennzeichnet, daß** auf ihm sowohl verschiedenartige Meßküvetten mit optischen Meßfenstem (3) und mit unterschiedlichen Kammersystemen als auch verschiedenartige Kammern (4, 5) unterschiedlicher Geometrie, die unterschiedliche Flüssigkeitsvolumina aufnehmen, zur Vorverdünnung und/oder Vorreaktion und/oder Separation von Flüssigkeiten angeordnet sind.

2. Multiküvettenrotor nach Anspruch 1, **dadurch gekennzeichnet, daß** die optischen Meßfenster (3) radial angeordnet sind und sich in gleichen oder unterschiedlichen radialen Abständen zueinander und/oder in ungleichmäßigen tangentialen Abständen zueinander von der Drehachse des Rotors befinden.

3. Multiküvettenrotor nach den Ansprüchen 1 und 2, **dadurch gekennzeichnet, daß** die Meßfenster (3) gleiche oder unterschiedliche Größen aufweisen.

4. Multiküvettenrotor nach den Ansprüchen 1 bis 3, **dadurch gekennzeichnet, daß** die Meßfenster (3) als optische Linsen ausgestaltet sind und/oder in Achsrichtung unterschiedlich weit auseinander liegen.

5. Multiküvettenrotor nach den Ansprüchen 1 bis 4, **dadurch gekennzeichnet, daß** eine Meßküvette aus mehreren nebeneinander liegenden oder mehrlagig übereinander liegenden Kammern oder Kammerkombinationen (6) gespeist oder parallel gespeist wird, deren Meßfenster gegenüber den Meßfenstern anderer Meßküvetten tangential oder radial oder in Drehachsrichtung versetzt sein können.

6. Multiküvettenrotor nach den Ansprüchen 1 bis 5, **dadurch gekennzeichnet, daß** jede Kammer (6) mit einem oder mehreren Pipettierlöchern (1) versehen ist und die Kammern untereinander durch horizontale Rampen (7) abgetrennt sein können.

7. Multiküvettenrotor nach den Ansprüchen 1 bis 6, **dadurch gekennzeichnet, daß** die Kammern (6) ein- oder beidseitig senkrechte Rampen (7) aufweisen, durch welche in Kombination mit horizontalen Rampen Düsen (8) ausgebildet werden können.

8. Multiküvettenrotor nach den Ansprüchen 1 bis 7, **dadurch gekennzeichnet, daß** die Kammern abgerundete Wandübergänge aufweisen und/oder ihre Böden (9) eine Rillen- oder Rippenstruktur (10, 11) mit kapillarer Wirkung besitzen.

9. Multiküvettenrotor nach den Ansprüchen 1 bis 8, **dadurch gekennzeichnet, daß** er Kammern (4) zur Zerlegung von Vollblut in Plasma und Blutzellen enthält, aus denen das Plasma wieder entnommen werden kann.

10. Multiküvettenrotor nach Anspruch 9, **dadurch gekennzeichnet, daß** die Kammern mit weiteren Kammern in Verbindung stehen, so daß Reagenz nachgelegt und zugemischt werden kann.

11. Multiküvettenrotor nach den Ansprüchen 1 bis 10, **dadurch gekennzeichnet, daß** er aus einem einheitlichen, durchsichtigen, thermoplastischen Material oder aus Einzelteilen aus verschiedenen thermoplastischen Materialien oder aus einem Mehrkomponenten-Material besteht.

## Claims

1. A multi-cell rotor for an automatic analyzer for examining biological fluids, comprising various types of measurement cells with optical measurement windows (3) and with different chamber systems, and also various types of chambers (4, 5) of different geometry, which receive different volumes of fluid and are used for preliminary dilution and/or preliminary reaction and/or separation of fluids.

2. The multi-cell rotor as claimed in claim 1, wherein the optical measurement windows (3) are radially arranged and are situated at identical or different radial distances from one another and/or are located at nonuniform tangential distances from one another from the axis of rotation of the rotor.

3. The multi-cell rotor as claimed in claims 1 and 2, wherein the measurement windows (3) are of identical or different sizes.

4. The multi-cell rotor as claimed in claims 1 to 3, wherein the measurement windows (3) are designed as optical lenses and/or lie at different distances from one another in the axial direction.

5. The multi-cell rotor as claimed in claims 1 to 4, wherein a measurement cell is fed from a plurality of chambers or chamber combinations (6) lying adjacent to one another or lying above one another in a plurality of layers or is fed in parallel, and the measurement windows of said measurement cell can be offset tangentially or radially or in the direction of the axis of rotation in relation to the measurement windows of other measurement cells.

6. The multi-cell rotor as claimed in claims 1 to 5, wherein each chamber (6) is provided with one or more pipette holes (1) and the chambers can be divided from one another by horizontal ramps (7).

7. The multi-cell rotor as claimed in claims 1 to 6, wherein the chambers (6) have ramps (7) which are vertical on one side or both sides and by which nozzles (8) can be formed in combination with horizontal ramps.

8. The multi-cell rotor as claimed in claims 1 to 7, wherein the chambers have rounded wall transitions and/or their bases (9) have a groove or rib structure (10, 11) with a capillary action.

9. The multi-cell rotor as claimed in claims 1 to 8, wherein said rotor contains chambers (4) for breaking whole blood up into plasma and blood cells, from which chambers the plasma can be again removed.

10. The multi-cell rotor as claimed in claim 9, wherein the chambers communicate with further chambers so that reagent can be added and admixed.

11. The multi-cell rotor as claimed in claims 1 to 10, wherein said rotor is made of a single transparent thermoplastic material or of individual parts made of different thermoplastic materials or of a multicomponent material.

## Revendications

1. Rotor à cuvettes multiples pour analyseur à fonctionnement automatique pour analyser des liquides biologiques, **caractérisé en ce qu'**il présente autant des cuvettes de mesure de différents types avec des fenêtres de mesure optique (3) et avec différents systèmes de chambres, que des chambres de différents types (4, 5) de géométrie différente, qui reçoivent différents volumes de liquide, pour une dilution préalable et/ou une réaction préalable et/ou une séparation de liquides.

2. Rotor à cuvettes multiples selon la revendication 1, **caractérisé en ce que** les fenêtres de mesure optiques (3) sont agencées radicalement et se trouvent à intervalles radiaux identiques ou différents l'une de l'autre et/ou à intervalles tangentiels inégaux l'une de l'autre de l'axe de rotation du rotor.

3. Rotor à cuvettes multiples selon les revendications 1 et 2, **caractérisé en ce que** les fenêtres de mesure (3) présentent des dimensions identiques ou différentes.

4. Rotor à cuvettes multiples selon les revendications 1 à 3, **caractérisé en ce que** les fenêtres de mesure (3) se présentent sous la forme de lentilles optiques et/ou se situent à des distances largement différentes l'une de l'autre dans la direction axiale.

5. Rotor à cuvettes multiples selon les revendications 1 à 4, **caractérisé en ce qu'**une cuvette de mesure est alimentée à partir de plusieurs chambres ou combinaisons de chambres situées côte à côte ou superposées en plusieurs couches ou alimentée en parallèle, leurs fenêtres de mesure pouvant être décalées par rapport aux fenêtres de mesure d'autres cuvettes de mesure tangentiellement ou radialement ou dans la direction de l'axe de rotation.

6. Rotor à cuvettes multiples selon les revendications 1 à 5, **caractérisé en ce que** chaque chambre (6) est pourvue d'un ou plusieurs orifices de pipetage (1) et les chambres peuvent être séparées les unes des autres par des rampes horizontales (7).

7. Rotor à cuvettes multiples selon les revendications 1 à 6, **caractérisé en ce que** les chambres (6) présentent des rampes (7) verticales sur un côté ou sur les deux côtés, à l'aide desquelles des buses peuvent être réalisées en combinaison avec des rampes horizontales (8).

8. Rotor à cuvettes multiples selon les revendications 1 à 7, **caractérisé en ce que** les chambres présentent des transitions de paroi arrondies et/ou leurs fonds (9) possèdent une structure en cannelures ou en nervures (10, 11) avec un effet capillaire.

9. Rotor à cuvettes multiples selon les revendications 1 à 8, **caractérisé en ce qu'**il contient des chambres (4) pour décomposer le sang complet en plasma et en cellules sanguines, dont on peut à nouveau extraire le plasma.

10. Rotor à cuvettes multiples selon la revendication 9, **caractérisé en ce que** les chambres communiquent avec d'autres chambres de sorte que l'on puisse ensuite ajouter un réactif et le mélanger.

11. Rotor à cuvettes multiples selon les revendications 1 à 10, **caractérisé en ce qu'**il est constitué d'un matériau homogène, transparent, thermoplastique ou d'éléments de différents matériaux thermoplastiques ou d'un matériau à plusieurs composants.
